# EUROPEAN PATENT APPLICATION

(11) **EP 4 561 120 A1**
(43) Date of publication of application: **28.05.2025**
(21) Application number: 22951521.8
(22) Date of filing: 20.07.2022
(51) Int. Cl.: H04W 4/06

(54) **CONFIGURATION METHOD AND APPARATUS FOR SUPPORTING RECEPTION OF INACTIVE MULTICAST SERVICE**

(71) Applicant: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Stöckeler, Ferdinand
(86) International application number: PCT/CN2022/106898
(87) International publication number: WO 2024/016244

(57) **Abstract**

The present disclosure relates to the technical field of mobile communications, and provides a configuration method and apparatus for supporting reception of an inactive multicast service. According to the configuration method for supporting reception of the inactive multicast service provided by embodiments of the present disclosure, for a terminal, the reception of a multicast service is executed by using inactive multicast service configuration information, so that when being released from a connected state to an inactive state, the terminal can still support the reception of the inactive multicast service, thereby ensuring normal execution of the multicast service in the inactive state.

## Description

### FIELD

The present disclosure relates to the field of communication technology, and particularly to a configuration method and apparatus for supporting reception of an inactive-state multicast service.

### BACKGROUND

In Release 17 (Rel-17), reception of a multicast service is only supported for a user equipment (UE) in a connected state. That is, if the UE wants to receive multicast service data, it is necessary to establish a radio resource control (RRC) connection and enter a RRC_CONNECTED state to receive the multicast service data, which cannot meet a requirement of a critical service such as a multimedia priority service (MPS), especially for a cell with a large number of UEs. Additionally, maintaining the UE in the RRC_CONNECTED state for the reception of the multicast service data leads to a significant power consumption. Therefore, in Release 18 (Rel-18), a research is focused on supporting the reception of an inactive-state multicast service, allowing terminals to continue to receive the multicast service data while it is in the inactive-state.

In an existing mechanism, when a terminal is released from the connected state to the inactive state, the terminal retains a radio resource configuration, only uses a configuration parameter in a suspend configuration (SuspendConfig), and suspends all the signal resource bearers (SRBs) except for SRBO between the terminal and a base station, as well as a data resource bearer (DRB) and a multicast resource bearer (MRB) between the terminal and the base station, which causes that the reception of the inactive-state multicast service cannot be supported.

### SUMMARY

The present disclosure provides a configuration method and apparatus for supporting reception of an inactive-state multicast service, enabling a terminal to support the reception of the inactive-state multicast service when it is released from a connected state to an inactive state.

According to a first aspect of embodiments of the present disclosure, there is provided a method for supporting reception of an inactive-state multicast service, performed by a terminal, including:
receiving a multicast service using inactive-state multicast service configuration information.

In an embodiment of the present disclosure, multicast service configuration information includes at least one of:
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

In an embodiment of the present disclosure, the MRB is an MRB of one or more connected-state multicast services.

In an embodiment of the present disclosure, the multicast service configuration information includes the MRB, and the method further includes:
determining, by the terminal, an MRB for receiving the inactive-state multicast service based on a multicast radio bearer identifier (MRB ID), wherein the multicast service configuration information includes the MRB ID; or
determining, by the terminal, an MRB for receiving the inactive-state multicast service based on network indication information, wherein the multicast service configuration information includes the network indication information.

In an embodiment of the present disclosure, the method further includes:
determining, by the terminal, based on the MRB ID or the network indication information, an MRB of one or more connected-state multicast services as the MRB for receiving the inactive-state multicast service.

In an embodiment of the present disclosure, the MAC configuration information includes at least one of:
group radio network temporary identifier (g-RNTI) related configuration information; or
group configured scheduling radio network temporary identifier (g-CS-RNTI) related configuration information.

In an embodiment of the present disclosure, the g-RNTI related configuration information or the g-CS-RNTI related configuration information includes at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

In an embodiment of the present disclosure, the BWP-specific multicast service configuration information includes at least one of:
common frequency resource (CFR) related configuration information; or
serving cell common configuration information.

In an embodiment of the present disclosure, the CFR related configuration information includes at least one of:
a frequency domain resource location and a bandwidth;
physical downlink control channel (PDCCH) configuration information;
physical downlink shared channel (PDSCH) configuration information; or
semi-persistent scheduling (SPS) configuration information.

In an embodiment of the present disclosure, the CFR related configuration information is initial BWP-specific CFR related configuration information.

In an embodiment of the present disclosure, the serving cell common configuration information includes at least information of a frequency domain resource location and a bandwidth of an initial BWP.

In an embodiment of the present disclosure, the method further includes:
saving the serving cell common configuration information, wherein the serving cell common configuration information includes at least information of a frequency domain resource location and a bandwidth of an initial BWP.

In an embodiment of the present disclosure, the method further includes:
receiving the BWP-specific multicast service configuration information sent by a network side through a radio resource control (RRC) signaling, and receiving, by the terminal, based on the BWP-specific multicast service configuration information, the inactive-state multicast service.

In an embodiment of the present disclosure, the method further includes:
receiving, by the terminal, the inactive-state multicast service based on BWP-specific multicast service configuration information of a connected-state multicast service.

In an embodiment of the present disclosure, the method further includes:
in a case that a network side does not configure the BWP-specific multicast service configuration information, receiving, by the terminal, the inactive-state multicast service based on BWP-specific multicast service configuration information of a connected-state multicast service.

In an embodiment of the present disclosure, the PDCP configuration information includes at least a PDCP configuration or a PDCP state variable.

In an embodiment of the present disclosure, the PDCP state variable includes at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

In an embodiment of the present disclosure, the RLC configuration information includes at least an RLC configuration or an RLC state variable.

In an embodiment of the present disclosure, the RLC state variable includes at least one of:
an earliest sequence number (SN) to be reassembled;
an SN value after an SN triggering a reassembling timer;
an SN value after a received maximum SN value; or
a reassembling timer.

In an embodiment of the present disclosure, the RLC configuration information includes:
for a split MRB, an RLC including an RLC for a point to multipoint (PTM) transmission.

In an embodiment of the present disclosure, the method further includes:
receiving a radio resource control release (RRCRelease) message containing a suspend configuration sent by the network side, wherein the RRCRelease message includes the multicast service configuration information.

In an embodiment of the present disclosure, the method further includes:
storing, by the terminal, the multicast service configuration information.

According to a second aspect of embodiments of the present disclosure, there is provided a method for supporting reception of an inactive-state multicast service, performed by a network side, including:
sending an inactive-state multicast service to a terminal, in which the inactive-state multicast service is received by the terminal using inactive-state multicast service configuration information.

In an embodiment of the present disclosure, the method further includes:
sending a radio resource control release (RRCRelease) message containing a suspend configuration to the terminal, wherein the RRCRelease message includes multicast service configuration information.

In an embodiment of the present disclosure, the multicast service configuration information includes at least one of
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

In an embodiment of the present disclosure, the MRB is an MRB of one or more connected-state multicast services.

In an embodiment of the present disclosure, the multicast service configuration information includes the MRB, and the method further includes:
wherein the multicast service configuration information includes a multicast radio bearer identifier (MRB ID) to cause the terminal to determine an MRB for receiving the inactive-state multicast service based on the MRB ID; or
wherein the multicast service configuration information includes network indication information to cause the terminal to determine the MRB for receiving the inactive-state multicast service based on the network indication information.

In an embodiment of the present disclosure, the MAC configuration information includes at least one of:
group radio network temporary identifier (g-RNTI) related configuration information; or
group configured scheduling radio network temporary identifier (g-CS-RNTI) related configuration information.

In an embodiment of the present disclosure, the g-RNTI related configuration information or the g-CS-RNTI related configuration information includes at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

In an embodiment of the present disclosure, the BWP-specific multicast service configuration information includes at least one of:
common frequency resource (CFR) related configuration information; or
serving cell common configuration information.

In an embodiment of the present disclosure, the CFR related configuration information includes at least one of:
a frequency domain resource location and a bandwidth;
physical downlink control channel (PDCCH) configuration information;
physical downlink shared channel (PDSCH) configuration information; or
semi-persistent scheduling (SPS) configuration information.

In an embodiment of the present disclosure, the serving cell common configuration information includes at least information of a frequency domain resource location and a bandwidth of an initial BWP.

In an embodiment of the present disclosure, the method further includes:
sending the BWP-specific multicast service configuration information to the terminal based on a radio resource control (RRC) signaling.

In an embodiment of the present disclosure, the PDCP configuration information comprises at least a PDCP configuration or a PDCP state variable.

In an embodiment of the present disclosure, the PDCP state variable includes at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

In an embodiment of the present disclosure, the RLC configuration information includes at least an RLC configuration or an RLC state variable.

In an embodiment of the present disclosure, the RLC state variable includes at least one of:
an earliest sequence number (SN) to be reassembled;
an SN value after an SN triggering a reassembling timer;
an SN value after a received maximum SN value; or
a reassembling timer.

In an embodiment of the present disclosure, the RLC configuration information includes:
for a split MRB, an RLC including an RLC for a point to multipoint (PTM) transmission.

According to a third aspect of embodiments of the present disclosure, there is provided a configuration apparatus for supporting reception of an inactive-state multicast service, applied to a terminal in an inactive state, and the apparatus includes:
a receiving module, configured to perform receive a multicast service using inactive-state multicast service configuration information.

According to a fourth aspect of embodiments of the present disclosure, there is provided a configuration apparatus for supporting reception of an inactive-state multicast service, applied to a network side, and the apparatus includes:
a sending module, configured to send an inactive-state multicast service to a terminal, in which the inactive-state multicast service is received by the terminal using inactive-state multicast service configuration information.

According to a fifth aspect of embodiments of the present disclosure, there is provided a communication device including: a transceiver; a memory; a processor connected with the transceiver and the memory respectively, in which the processor is configured to control the transceiver to send and receive radio signals by performing computer executable instructions on the memory and is capable of implementing the method as described in the first aspect or the method as described in the second aspect.

According to a sixth aspect of embodiments of the present disclosure, there is provided a computer storage medium, wherein the computer storage medium stores computer executable instructions, and when the computer executable instructions are executed by a processor, the method as described in the first aspect or the method as described in the second aspect is implemented.

In the present disclosure, there is provided a configuration method and apparatus for supporting reception of an inactive-state multicast service. A terminal in an inactive state can receive a multicast service using inactive-state multicast service configuration information. By the above operation, the terminal may support the reception of the inactive-state multicast service even when it is released from a connected state to the inactive state, thereby ensuring the normal execution of the multicast service in the inactive state.

The additional aspects and advantages of the present disclosure will be partly set forth in the following description, partly become apparent from the description, or be realized through practice of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, wherein:
FIG. 1 is a flow chart showing a configuration method for supporting reception of an inactive-state multicast service according to an embodiment of the present disclosure.
FIG. 2 is a flow chart showing a configuration method for supporting reception of an inactive-state multicast service according to an embodiment of the present disclosure.
FIG. 3 is a flow chart showing a configuration method for supporting reception of an inactive-state multicast service according to an embodiment of the present disclosure.
FIG. 4 is sequence diagram showing a configuration method for supporting reception of an inactive-state multicast service according to an embodiment of the present disclosure.
FIG. 5 is a block diagram showing a configuration apparatus for supporting reception of an inactive-state multicast service according to an embodiment of the present disclosure.
FIG. 6 is a block diagram showing a configuration apparatus for supporting reception of an inactive-state multicast service according to an embodiment of the present disclosure.
FIG. 7 is a block diagram showing a communication apparatus according to an embodiment of the present disclosure.
FIG. 8 is a block diagram showing a chip provided in an embodiment of the present disclosure.

### DETAILED DESCRIPTION

The following describes embodiments of the present disclosure in detail. Examples of the embodiments are shown in the accompanying drawings, and an identical or similar reference numeral represents identical or similar elements or elements with an identical or similar function. The embodiments described with reference to the accompanying drawings are exemplary and are intended to explain the present disclosure, and shall not be construed as a limitation on the present disclosure.

In an existing mechanism, when a terminal is released from a connected state to an inactive state, the terminal retains a radio resource configuration, only uses a configuration parameter in a suspend configuration (SuspendConfig), and suspends all the signal resource bearers (SRBs) except for SRBO between the terminal and a base station, as well as a data resource bearer (DRB) and a multicast resource bearer (MRB) between the terminal and the base station, which causes that the reception of the inactive-state multicast service cannot be supported.

Accordingly, the present disclosure provides a configuration method for supporting reception of an inactive-state multicast service, which may enable the terminal to still support the reception of the inactive-state multicast service when it is released from the connected state to the inactive state.

A switching method and apparatus provided by the present disclosure will be introduced in detail below in conjunction with the accompanying drawings.

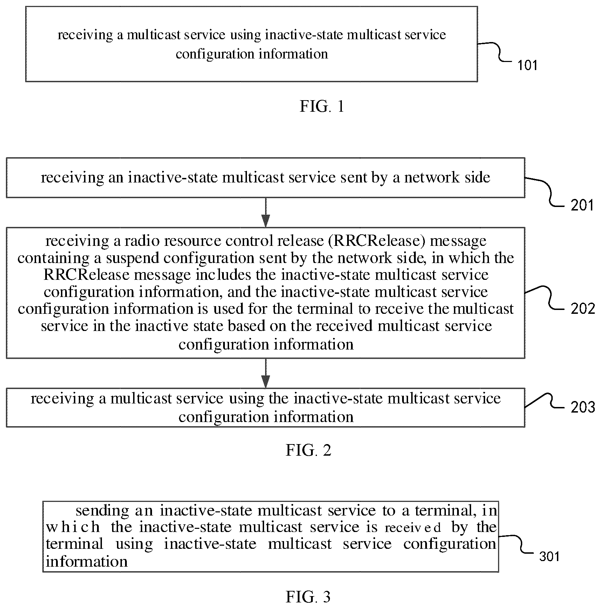

FIG. 1 is a flow chart showing a configuration method for supporting reception of an inactive-state multicast service according to an embodiment of the present disclosure. As shown in FIG. 1, the method is performed by a terminal and may include the following steps.

In step 101, a multicast service is received using inactive-state multicast service configuration information.

An inactive-state multicast service (also called, multicast broadcast service, MBS) is a multicast service where a terminal in an inactive state may still receive service data.

For an embodiment of the present disclosure, the terminal stores multicast service configuration information for receiving the inactive-state multicast service.

For an embodiment of the present disclosure, the multicast service configuration information may be sent by a network side. Specifically, the network side may send a radio resource control release (RRCRelease) message containing a suspend configuration (SuspendConfig) to the terminal. After receiving the RRCRelease message containing the suspend configuration sent by the network side, the terminal extracts inactive-state multicast service configuration information from the RRCRelease message.

The multicast service configuration information includes at least one of: a multicast radio bearer (MRB), medium access control (MAC) configuration information related to the multicast service, bandwidth part (BWP)-specific multicast service configuration information, packet data convergence protocol (PDCP) configuration information related to the multicast service, radio link control (RLC) configuration information related to the multicast service or service data adaptation protocol (SDAP) configuration information related to the multicast service.

When the multicast service configuration information includes the MRB, the MRB may be an MRB of one or more connected-state multicast services.

As a possible implementation, the multicast service configuration information includes a multicast radio bearer identifier (MRB ID), and the terminal may determine an MRB for receiving the inactive-state multicast service based on the MRB ID.

As a possible implementation, the multicast service configuration information includes network indication information, and the terminal may determine an MRB for receiving the inactive-state multicast service based on the network indication information.

Accordingly, as a possible implementation, the MRB for receiving the inactive-state multicast service may be determined based on the MRB of one or more connected-state multicast services.

As a possible implementation, the terminal may determine the MRB of one or more connected-state multicast services based on the MRB ID, and may further determine the MRB of one or more connected-state multicast services as the MRB for receiving the inactive-state multicast service.

As a possible implementation, the terminal may determine the MRB of one or more connected-state multicast services based on the network indication information, such as 1-bit indication information, and may further determine the MRB of one or more connected-state multicast services as the MRB for receiving the inactive-state multicast service.

As a possible implementation, the terminal may determine, based on the network indication information, such as the 1-bit indication information, whether the MRBs of all connected-state multicast services are determined as the MRBs for receiving the inactive-state multicast service.

When the multicast service configuration information includes the MAC configuration information, the MAC configuration information may include at least one of: group radio network temporary identifier (g-RNTI) related configuration information or group configured scheduling radio network temporary identifier (g-CS-RNTI) related configuration information.

The g-RNTI related configuration information or the g-CS-RNTI related configuration information includes at least one of: a radio network temporary identifier (RNTI)-specific configuration ID, a g-RNTI, a g-CS-RNTI, discontinuous reception (DRX) configuration information (as a possible implementation, the DRX configuration information may be obtained through a drx-ConfiguraPTM-r17 indication), hybrid automatic repeat request (HARQ) feedback configuration information (as a possible implementation, the HARQ feedback configuration information may be obtained through a harq-FeedbackEnablerMulticast-r17 indication or a harq-FeedbackOptionMulticast-r17 indication), or a number of repetitions of dynamic scheduling of multicast service data (as a possible implementation, the number of repetitions of dynamic scheduling of multicast service data is only for the g-RNTI, or as a possible implementation, the number of repetitions of dynamic scheduling of multicast service data may be obtained through the a pdsch-AggregationFactorMulticast-r17 indication).

When the multicast service configuration information includes the BWP-specific multicast service configuration information, the BWP-specific multicast service configuration information may be obtained by the following methods. The network side sends the BWP-specific multicast service configuration information to the terminal based on a RRC signaling, and accordingly, the terminal may receive the BWP-specific multicast service configuration information sent by the network side based on the RRC signaling, in which the BWP may be an initial BWP. Furthermore, as a possible implementation, the terminal may receive the inactive-state multicast service based on the BWP-specific multicast service configuration information sent by the network side. As a possible implementation, when a connected-state multicast service is configured on the initial BWP, the terminal may reuse BWP-specific multicast service configuration information of the connected-state multicast service and receive the inactive-state multicast service based on the BWP-specific multicast service configuration information of the connected-state multicast service. As a possible implementation, when the network side does not send the BWP-specific multicast service configuration information, the terminal reuses the BWP-specific multicast service configuration information of the connected-state multicast service by default, in which the BWP of the connected-state multicast service may be the initial BWP.

The BWP-specific multicast service configuration information may include at least one of: common frequency resource (CFR) related configuration information or serving cell common configuration information (servingCellConfigCommonSIB).

The CFR related configuration information includes at least one of: a frequency domain resource location and a bandwidth (as a possible implementation, the frequency domain resource location and the bandwidth may be obtained through a locationAndBandwidthMulticast-r17 indication), physical downlink control channel (PDCCH) configuration information (as a possible implementation, the PDCCH configuration information may be obtained through a pdcch-ConfigMulticast-r17 indication), physical downlink shared channel (PDSCH) configuration information (as a possible implementation, the PDSCH configuration information may be obtained through a pdsch-ConfigMulticast-r17 indication) or semi-persistent scheduling (SPS) configuration information (as a possible implementation, the SPS configuration information may be obtained through a sps-ConfigMulticastToAddModList-r17 indication or a sps-ConfigMulticastToReleaseList-r17 indication).

As a possible implementation, the CFR related configuration information is initial BWP-specific CFR related configuration information.

As a possible implementation, the serving cell common configuration information includes at least information of a frequency domain resource location and a bandwidth of the initial BWP (locationAndBandwidth).

For an embodiment of the present disclosure, the terminal may further store the serving cell common configuration information (i.e., the terminal does not release or suspend the serving cell common configuration information), and the serving cell common configuration information includes at least the information of the frequency domain resource location and the bandwidth of the initial BWP.

When the multicast service configuration information includes the PDCP configuration information, the PDCP configuration information may include at least PDCP configuration information or a PDCP state variable.

The PDCP state variable may include at least one of: a count value of a next packet data convergence protocol service data unit (PDCP SDU) to be transmitted (TX_NEXT), a count value of a next PDCP SDU to be received (RX_NEXT), a count value of a first PDCP SDU to be delivered to an upper layer (RX_DELIV), a count value after a count value of a PDCP PDU triggering a reordering timer (RX_REORD, which may specifically be the count value of the PDCP PDU triggering the reordering timer + 1) or a reordering timer (t-Reordering).

When the multicast service configuration information includes the RLC configuration information, the RLC configuration information may include at least RLC configuration information or an RLC state variable. As a possible implementation, the RLC configuration information includes one or more RLC configuration parameters configured through RLC-BearerConfig.

The RLC state variable includes at least one of: an earliest sequence number (SN) to be reassembled (RX_Next_Reassembly), an SN value after an SN triggering a reassembling timer (RX_Timer_Trigger, i.e., the SN triggering the reassembling timer + 1), an SN value after a received maximum SN value (RX_Next_Highest, i.e., the maximum SN value + 1) or a reassembling timer (t-Reassembly).

As a possible implementation, for a split MRB, an RLC includes an RLC for a point to multipoint (PTM) transmission.

In summary, according to the configuration method for supporting reception of an inactive-state multicast service provided by the embodiment of the present disclosure, the terminal may still support the reception of inactive-state multicast service when it is released from the connected state to the inactive state, by using the inactive-state multicast service configuration information to receive the multicast service. In this way, a normal execution of the multicast service in the inactive state may be ensured.

FIG. 2 is a flow chart showing a configuration method for supporting reception of an inactive-state multicast service according to an embodiment of the present disclosure. This method is performed by a terminal, based on an embodiment shown in FIG. 1, as shown in FIG. 2, the method may include the following steps.

In step 201, an inactive-state multicast service sent by a network side is received.

The network side may include at least one of a base station or a core network. The terminal may be a terminal in an inactive state. The inactive-state multicast service (MBS) is a multicast service where the terminal in the inactive state may still receive service data. The network side may send the inactive-state multicast service to the terminal in the inactive state, so that the terminal in inactive state terminal may execute a reception process of the inactive-state multicast service as a response.

In step 202, a radio resource control release (RRCRelease) message containing a suspend configuration sent by the network side is received. The RRCRelease message include inactive-state multicast service configuration information. Multicast service configuration information is used to enable the terminal to receive the multicast service in the inactive state based on the received multicast service configuration information.

In some implementations, the suspend configuration may include the multicast service configuration information. In an embodiment of the present disclosure, the terminal may determine the inactive-state multicast service configuration information based on the multicast service configuration information received in a connected state, and receive the multicast service in the inactive state. The inactive-state multicast service configuration information may be all or part of the multicast service configuration information received in the connected state.

As a possible implementation, the terminal may determine, based on network indication information, such as 1-bit indication information, whether the multicast radio bearers (MRBs) of all connected-state multicast services are determined as the MRBs for receiving the inactive-state multicast service.

In a related technology, when a terminal is released from the connected state to the inactive state, the terminal retains a radio resource configuration, only uses a configuration parameter in a suspend configuration (SuspendConfig), and suspends all the signal resource bearers (SRBs) except for SRBO between the terminal and a base station, as well as a data resource bearer (DRB) and a multicast resource bearer (MRB) between the terminal and the base station, which results in that the reception of the inactive-state multicast service cannot be supported.

Based on this, in this embodiment of the present disclosure, the network side may send the inactive-state multicast service configuration information to the terminal to enable the terminal to obtain the multicast service configuration information. Since the multicast service configuration information is in the suspend configuration, the terminal may receive the multicast service normally in the inactive state using the multicast service configuration information.

The multicast service configuration information includes at least one of: a multicast radio bearer (MRB), medium access control (MAC) configuration information related to the multicast service, bandwidth part (BWP)-specific multicast service configuration information, packet data convergence protocol (PDCP) configuration information related to the multicast service, radio link control (RLC) configuration information related to the multicast service or service data adaptation protocol (SDAP) configuration information related to the multicast service.

In response to the multicast service configuration information including the MRB, as a possible implementation, the terminal may directly extract an MRB for receiving the inactive-state multicast service from the received multicast service configuration information. As a possible implementation, the multicast service configuration information may further include a multicast service radio bearer identifier (MRB ID) or a network indication. The terminal may determine an MRB of one or more connected-state multicast services based on the MRB ID or the network indication, and further determine the MRB of one or more connected-state multicast services as the MRB for receiving the inactive-state multicast service.

In response to the multicast service configuration information including the MAC configuration information, as a possible implementation, the MAC configuration information includes at least one of: group radio network temporary identifier (g-RNTI) related configuration information or group configured scheduling radio network temporary identifier (g-CS-RNTI) related configuration information. The g-RNTI related configuration information or the g-CS-RNTI related configuration information includes at least one of: a radio network temporary identifier (RNTI)-specific configuration ID, a g-RNTI, a g-CS-RNTI, discontinuous reception (DRX) configuration information, hybrid automatic repeat request (HARQ) feedback configuration information or a number of repetitions of dynamic scheduling of multicast service data. It should be noted that the number of repetitions of dynamic scheduling of multicast service data is configured only for g-RNTI.

In response to the multicast service configuration information including the BWP-specific multicast service configuration information, the BWP-specific multicast service configuration information includes at least one of: common frequency resource (CFR) related configuration information or serving cell common configuration information. The CFR related configuration information may be initial BWP-specific CFR related configuration information. The CFR related configuration information may include at least one of: a frequency domain resource location and a bandwidth, physical downlink control channel (PDCCH) configuration information, physical downlink shared channel (PDSCH) configuration information or semi-persistent scheduling (SPS) configuration information. The serving cell common configuration information includes at least information of a frequency domain resource location and a bandwidth of an initial BWP. The BWP-specific multicast service configuration information may be obtained by the following methods. The network side sends the BWP-specific multicast service configuration information to the terminal based on a RRC signaling, and accordingly, the terminal may receive the BWP-specific multicast service configuration information sent by the network side based on the RRC signaling, in which the BWP may be an initial BWP. Furthermore, as a possible implementation, the terminal may receive the inactive-state multicast service based on the BWP-specific multicast service configuration information sent by the network side. As a possible implementation, when a connected-state multicast service is configured on the initial BWP, the terminal may reuse BWP-specific multicast service configuration information of the connected-state multicast service and receive the inactive-state multicast service based on the BWP-specific multicast service configuration information of the connected-state multicast service. As a possible implementation, when the network side does not send the BWP-specific multicast service configuration information, the terminal reuses the BWP-specific multicast service configuration information of the connected-state multicast service by default, i.e., using the BWP-specific multicast service configuration information on the initial BWP by default.

In response to the multicast service configuration information including the PDCP configuration information, the PDCP configuration information may include at least a PDCP configuration or a PDCP state variable. The PDCP state variable may include at least one of: a count value of a next packet data convergence protocol service data unit (PDCP SDU) to be transmitted, a count value of a next PDCP SDU to be received, a count value of a first PDCP SDU to be delivered to an upper layer, a count value after a count value of a PDCP PDU triggering a reordering timer or a reordering timer.

In response to the multicast service configuration information including the RLC configuration information, the RLC configuration information includes at least an RLC configuration or an RLC state variable. The RLC state variable may include at least one of: an earliest sequence number (SN) to be reassembled, an SN value after an SN triggering a reassembling timer, an SN value after a received maximum SN value or a reassembling timer. As a possible implementation, for a split MRB, an RLC only includes an RLC for a point to multipoint (PTM) transmission.

In step 203, the multicast service is received using the inactive-state multicast service configuration information.

In an embodiment of the present disclosure, after receiving the inactive-state multicast service configuration information sent by the network side, the terminal may further perform configuration of a parameter related to the inactive-state multicast service based on the multicast service configuration information. After the configuration, the terminal in the inactive state may realize the reception of the inactive-state multicast service.

In summary, according to the configuration method for supporting reception of an inactive-state multicast service provided by this embodiment of the present disclosure, when the terminal is released from the connected state to the inactive state, the terminal in the inactive state may realize the reception of the multicast service by receiving the inactive-state multicast service configuration information sent by the network side and configuring the parameter related to the multicast service based on the multicast service configuration information. In this way, a normal execution of the multicast service in the inactive state may be ensured.

FIG. 3 is a flow chart showing a configuration method for supporting reception of an inactive-state multicast service according to an embodiment of the present disclosure. As shown in FIG. 3, the method is performed by a network side, the network side may include at least one of a base station or a core network, and the method may include the following steps.

In step 301, an inactive-state multicast service is sent to a terminal, and the inactive-state multicast service is received by the terminal using inactive-state multicast service configuration information.

For an embodiment of the present disclosure, the network side may first send the inactive-state multicast service to the terminal. When the terminal responds and executes the inactive-state multicast service, the network side may send a radio resource control release (RRCRelease) message containing a suspend configuration (SuspendConfig) to the terminal. The RRCRelease message includes the inactive-state multicast service configuration information, so that the terminal that supports the reception of the inactive-state multicast service may receive the multicast service in an inactive state based on the received multicast service configuration information.

The multicast service configuration information includes at least one of: a multicast radio bearer (MRB), medium access control (MAC) configuration information related to the multicast service, bandwidth part (BWP)-specific multicast service configuration information, packet data convergence protocol (PDCP) configuration information related to the multicast service, radio link control (RLC) configuration information related to the multicast service or service data adaptation protocol (SDAP) configuration information related to the multicast service.

In response to the multicast service configuration information sent by the network side to the terminal including the MRB, as a possible implementation, the network side may directly send an MRB for receiving the inactive-state multicast service to the terminal. As a possible implementation, the network side may send a multicast service radio bearer identifier (MRB ID) or a network indication to the terminal, so that the terminal may further determine an MRB of one or more connected-state multicast services based on the MRB ID or the network indication, and further determine the MRB of one or more connected-state multicast services as the MRB for receiving the inactive-state multicast service.

In response to the multicast service configuration information sent by the network side to the terminal including the MAC configuration information, as a possible implementation, the MAC configuration information includes at least one of: group radio network temporary identifier (g-RNTI) related configuration information or group configured scheduling radio network temporary identifier (g-CS-RNTI) related configuration information. The g-RNTI related configuration information or the g-CS-RNTI related configuration information includes at least one of: a radio network temporary identifier (RNTI)-specific configuration ID, a g-RNTI, a g-CS-RNTI, discontinuous reception (DRX) configuration information, hybrid automatic repeat request (HARQ) feedback configuration information or a number of repetitions of dynamic scheduling of multicast service data. It should be noted that the configuration of the number of repetitions of dynamic scheduling of multicast service data is only for g-RNTI.

In response to the multicast service configuration information sent by the network side to the terminal including the BWP-specific multicast service configuration information, the BWP-specific multicast service configuration information includes at least one of: common frequency resource (CFR) related configuration information or serving cell common configuration information. The CFR related configuration information includes at least one of: a frequency domain resource location and a bandwidth, physical downlink control channel (PDCCH) configuration information, physical downlink shared channel (PDSCH) configuration information or semi-persistent scheduling (SPS) configuration information. The serving cell common configuration information includes at least information of a frequency domain resource location and a bandwidth of an initial BWP. In a specific application scenario, when the network side sends the BWP-specific multicast service configuration information to the terminal, the network side may send the BWP-specific multicast service configuration information to the terminal based on a RRC signaling, so that the terminal may receive the inactive-state multicast service based on the BWP-specific multicast service configuration information sent by the network side. The BWP may be an initial BWP.

In response to the multicast service configuration information sent by the network side to the terminal including the PDCP configuration information, the PDCP configuration information includes at least a PDCP configuration or a PDCP state variable. The PDCP state variable includes at least one of: a count value of a next packet data convergence protocol service data unit (PDCP SDU) to be transmitted, a count value of a next PDCP SDU to be received, a count value of a first PDCP SDU to be delivered to an upper layer, a count value after a count value of a PDCP PDU triggering a reordering timer or a reordering timer.

In response to the multicast service configuration information sent by the network side to the terminal including the RLC configuration information, the RLC configuration information includes at least an RLC configuration or an RLC state variable. The RLC state variable includes at least one of: an earliest sequence number (SN) to be reassembled, an SN value after an SN triggering a reassembling timer, an SN value after a received maximum SN value or a reassembling timer. As a possible implementation, for a split MRB, an RLC only includes an RLC for a point to multipoint (PTM) transmission.

As a possible implementation, the terminal may send network indication information, such as 1-bit indication information, to the terminal. The network indication information is used for the terminal to determine whether the MRBs of all connected-state multicast services are determined as the MRBs for receiving the inactive-state multicast service.

In summary, according to the configuration method for supporting reception of an inactive-state multicast service provided by this embodiment of the present disclosure, by sending the inactive-state multicast service to the terminal and sending the inactive-state multicast service configuration information to the terminal when the terminal responds and executes the inactive-state multicast service, the terminal that supports the reception of the inactive-state multicast service may receive the multicast service in the inactive state based on the received multicast service configuration information, and may ensure a normal execution of the multicast service in the inactive state.

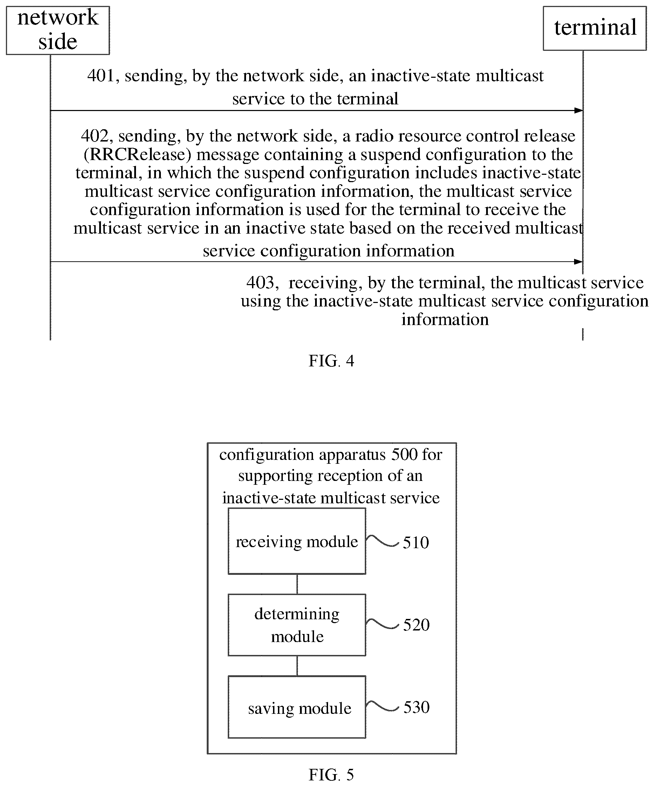

FIG. 4 is sequence diagram showing a configuration method for supporting reception of an inactive-state multicast service according to an embodiment of the present disclosure. The method is applied to a configuration system for supporting reception of an inactive-state multicast service, which includes: a user equipment (UE), a network side. The network side sends the inactive-state multicast service and inactive-state multicast service configuration information to the UE. The terminal receives a multicast service using the inactive-state multicast service configuration information.

In step 401, the inactive-state multicast service is sent to the terminal by the network.

In step 402, a radio resource control release (RRCRelease) message containing a suspend configuration is sent to the terminal by the network side. The suspend configuration includes the inactive-state multicast service configuration information. The multicast service configuration information is used for the terminal to receive the multicast service in an inactive state based on the received multicast service configuration information.

In some implementations, the suspend configuration may include the multicast service configuration information. In an embodiment of the present disclosure, the terminal may determine the inactive-state multicast service configuration information based on the multicast service configuration information received in a connected state, and receive the multicast service in the inactive state. The inactive-state multicast service configuration information may be all or part of the multicast service configuration information received in the connected state.

As a possible implementation, the terminal may determine whether the multicast radio bearer (MRBs) of all connected-state multicast services are determined as MRBs for receiving the inactive-state multicast service, based on network indication information, such as 1-bit indication information.

In a related technology, when the terminal is released from the connected state to the inactive state, the terminal retains a radio resource configuration, only uses a configuration parameter in the suspend configuration (SuspendConfig), and suspends all the signal resource bearers (SRBs), except for SRBO, between the terminal and a base station, as well as a data resource bearer (DRB) and a multicast resource bearer (MRB) between the terminal and the base station, which results in that the reception of the inactive-state multicast service cannot be supported.

Based on this, in an embodiment of the present disclosure, the network side may send the inactive-state multicast service configuration information to the terminal to enable the terminal to obtain the multicast service configuration information. Since the multicast service configuration information is in the suspend configuration, the terminal may receive the multicast service normally in the inactive state using the multicast service configuration information.

For an embodiment of the present disclosure, the multicast service configuration information includes at least one of: a multicast radio bearer (MRB), medium access control (MAC) configuration information related to the multicast service, bandwidth part (BWP)-specific multicast service configuration information, packet data convergence protocol (PDCP) configuration information related to the multicast service, radio link control (RLC) configuration information related to the multicast service or service data adaptation protocol (SDAP) configuration information related to the multicast service.

The MRB may be an MRB of one or more connected-state multicast services. The terminal may obtain the MRB based on a multicast service radio bearer identifier (MRB ID) or network indication information in the multicast service configuration information. The MAC configuration information includes at least one of: group radio network temporary identifier (g-RNTI) related configuration information or group configured scheduling radio network temporary identifier (g-CS-RNTI) related configuration information. The g-RNTI related configuration information or the g-CS-RNTI related configuration information includes at least one of: a radio network temporary identifier (RNTI)-specific configuration ID, a g-RNTI, a g-CS-RNTI, discontinuous reception (DRX) configuration information, hybrid automatic repeat request (HARQ) feedback configuration information or a number of repetitions of dynamic scheduling of multicast service data. The BWP-specific multicast service configuration information includes at least one of: common frequency resource (CFR) related configuration information or serving cell common configuration information. The CFR related configuration information is initial BWP-specific CFR related configuration information. The CFR related configuration information includes at least one of: a frequency domain resource location and a bandwidth, physical downlink control channel (PDCCH) configuration information, physical downlink shared channel (PDSCH) configuration information or semi-persistent scheduling (SPS) configuration information. The serving cell common configuration information includes at least information of a frequency domain resource location and a bandwidth of an initial BWP. The PDCP configuration information includes at least a PDCP configuration or a PDCP state variable. The PDCP state variable includes at least one of: a count value of a next packet data convergence protocol service data unit (PDCP SDU) to be transmitted, a count value of a next PDCP SDU to be received, a count value of a first PDCP SDU to be delivered to an upper layer, a count value after a count value of a PDCP PDU triggering a reordering timer or a reordering timer. The RLC configuration information includes at least an RLC configuration or an RLC state variable. The RLC state variable includes at least one of: an earliest sequence number (SN) to be reassembled, an SN value after an SN triggering a reassembling timer, an SN value after a received maximum SN value or a reassembling timer. As a possible implementation, for a split MRB, an RLC includes only an RLC for a point to multipoint (PTM) transmission.

In step 403, the multicast service is received by the terminal using the inactive-state multicast service configuration information.

In response to an execution of inactive-state multicast service by the terminal, and during the execution process, the terminal may receive the inactive-state multicast service configuration information sent by the network side. The terminal may store the multicast service configuration information and may perform configuration of a parameter related to the inactive-state multicast service based on the received multicast service configuration information. After the configuration, the terminal in the inactive state may realize the reception of the inactive-state multicast service.

For an embodiment of the present disclosure, the implementation process of receiving the multicast service using the inactive-state multicast service configuration information is the same as the step 101, which will not be repeated here.

According to the configuration method for support reception of an inactive-state multicast service provided in the present embodiment, when the terminal is released from the connected state to the inactive state, the terminal in the inactive state may realize the reception of the multicast service by receiving the inactive-state multicast service configuration information sent by the network side and configuring the parameter related to the multicast service based on the multicast service configuration information. In this way, a normal execution of the multicast service in the inactive state may be ensured.

In the above embodiments of the present disclosure, the methods provided by the embodiments of the present disclosure are introduced from the perspectives of the network side and the terminal, respectively. In order to implement the various functions in the methods provided by the embodiments of the present disclosure, the network side and the terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

Corresponding to the configuration method for supporting reception of an inactive-state multicast service provided in the above embodiments, the present disclosure further provides a configuration apparatus for supporting reception of an inactive-state multicast service. As the configuration apparatus for supporting reception of an inactive-state multicast service provided in the present disclosure corresponds to the configuration method for supporting reception of an inactive-state multicast service provided in the above embodiments, the implementations of the configuration method for supporting reception of an inactive-state multicast service is also applicable to the configuration apparatus for supporting reception of an inactive-state multicast service provided in the present embodiment, which will not be described in detail in the present embodiment.

FIG. 5 is a block diagram showing a configuration apparatus 500 for supporting reception of an inactive-state multicast service according to an embodiment of the present disclosure, and the configuration apparatus 500 for supporting reception of an inactive-state multicast service may be applied to a terminal.

As shown in FIG. 5, the configuration apparatus 500 may include:
a receiving module 510, configured to receive a multicast service using inactive-state multicast service configuration information.

In an embodiment of the present disclosure, multicast service configuration information includes at least one of:
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

In an embodiment of the present disclosure, the MRB is an MRB of one or more connected-state multicast services.

In an embodiment of the present disclosure, the multicast service configuration information includes the MRB. As shown in FIG. 5, the configuration apparatus 500 further includes a determining module 520, configured to:
determine, by the terminal, an MRB for receiving the inactive-state multicast service based on a multicast radio bearer identifier (MRB ID), in which the multicast service configuration information includes the MRB ID; or
determine, by the terminal, an MRB for receiving the inactive-state multicast service based on network indication information, in which the multicast service configuration information includes the network indication information.

As a possible implementation, the terminal may determine whether the multicast radio bearer (MRBs) of all connected-state multicast services are determined as the MRBs for receiving the inactive-state multicast service, based on the network indication information, such as 1-bit indication information.

In an embodiment of the present disclosure, the determining module 520 is configured to determine, by the terminal, the MRB of one or more connected-state multicast services as the MRB for receiving the inactive-state multicast service, based on the MRB ID or the network indication information.

In an embodiment of the present disclosure, the MAC configuration information includes at least one of:
group radio network temporary identifier (g-RNTI) related configuration information; or
group configured scheduling radio network temporary identifier (g-CS-RNTI) related configuration information.

In an embodiment of the present disclosure, the g-RNTI related configuration information or the g-CS-RNTI related configuration information includes at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

In an embodiment of the present disclosure, the BWP-specific multicast service configuration information includes at least one of:
common frequency resource (CFR) related configuration information; or
serving cell common configuration information.

In an embodiment of the present disclosure, the CFR related configuration information includes at least one of:
a frequency domain resource location and a bandwidth;
physical downlink control channel (PDCCH) configuration information;
physical downlink shared channel (PDSCH) configuration information; or
semi-persistent scheduling (SPS) configuration information.

In an embodiment of the present disclosure, the CFR related configuration information is initial BWP-specific CFR related configuration information.

In an embodiment of the present disclosure, the serving cell common configuration information includes at least information of a frequency domain resource location and a bandwidth of an initial BWP.

In an embodiment of the present disclosure, as shown in FIG. 5, the configuration apparatus 500 further includes a saving module 530.

The saving module 530 is configured to save the serving cell common configuration information, in which the serving cell common configuration information includes at least information of a frequency domain resource location and a bandwidth of an initial BWP.

In an embodiment of the present disclosure, the receiving module 510 is further configured to receive the BWP-specific multicast service configuration information sent by a network side through a radio resource control (RRC) signaling, and receive, by the terminal, the inactive-state multicast service, based on the BWP-specific multicast service configuration information.

In an embodiment of the present disclosure, the receiving module 510 is further configured to receive, by the terminal, the inactive-state multicast service based on BWP-specific multicast service configuration information of a connected-state multicast service.

In an embodiment of the present disclosure, the receiving module 510 is further configured to receive, by the terminal, the inactive-state multicast service based on BWP-specific multicast service configuration information of a connected-state multicast service, in a case that a network side does not configure the BWP-specific multicast service configuration information, .

In an embodiment of the present disclosure, the PDCP configuration information includes at least a PDCP configuration or a PDCP state variable.

In an embodiment of the present disclosure, the PDCP state variable includes at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

In an embodiment of the present disclosure, the RLC configuration information includes at least an RLC configuration or an RLC state variable.

In an embodiment of the present disclosure, the RLC state variable includes at least one of:
an earliest sequence number (SN) to be reassembled;
an SN value after an SN triggering a reassembling timer;
an SN value after a received maximum SN value; or
a reassembling timer.

In an embodiment of the present disclosure, the RLC configuration information includes:
for a split MRB, an RLC including an RLC for a point to multipoint (PTM) transmission.

In an embodiment of the present disclosure, the receiving module 510 is further configured to receive a radio resource control release (RRCRelease) message containing a suspend configuration sent by the network side, in which the RRCRelease message includes the multicast service configuration information.

In an embodiment of the present disclosure, the saving module 530 is configured to store the multicast service configuration information.

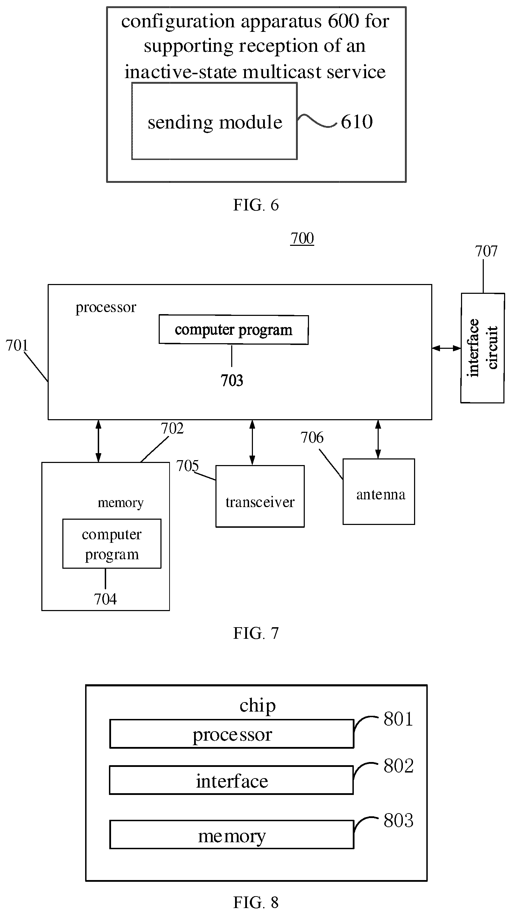

FIG. 6 is a block diagram showing a configuration apparatus 600 for supporting reception of an inactive-state multicast service according to an embodiment of the present disclosure, and the configuration apparatus 600 for supporting reception of an inactive-state multicast service may be applied to a network side.

As shown in FIG. 6, the configuration apparatus 600 includes:
a sending module, configured to send a radio resource control release (RRCRelease) message containing a suspend configuration to the terminal, in which the RRCRelease message includes multicast service configuration information.

In an embodiment of the present disclosure, the multicast service configuration information includes at least one of
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

In an embodiment of the present disclosure, the MRB is an MRB of one or more connected-state multicast services.

As a possible implementation, the network side may send network indication information, such as 1-bit indication information, to the terminal. The network indication information is used for the terminal to determine whether the MRBs of all connected-state multicast services are determined as MRBs for receiving the inactive-state multicast service.

In an embodiment of the present disclosure, when the multicast service configuration information includes the MRB, the multicast service configuration information includes a multicast radio bearer identifier (MRB ID) to cause the terminal to determine an MRB for receiving the inactive-state multicast service based on the MRB ID, or the multicast service configuration information includes network indication information to cause the terminal to determine the MRB for receiving the inactive-state multicast service based on the network indication information.

In an embodiment of the present disclosure, the MAC configuration information includes at least one of:
group radio network temporary identifier (g-RNTI) related configuration information; or
group configured scheduling radio network temporary identifier (g-CS-RNTI) related configuration information.

In an embodiment of the present disclosure, the g-RNTI related configuration information or the g-CS-RNTI related configuration information includes at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

In an embodiment of the present disclosure, the BWP-specific multicast service configuration information includes at least one of:
common frequency resource (CFR) related configuration information; or
serving cell common configuration information.

In an embodiment of the present disclosure, the CFR related configuration information includes at least one of:
a frequency domain resource location and a bandwidth;
physical downlink control channel (PDCCH) configuration information;
physical downlink shared channel (PDSCH) configuration information; or
semi-persistent scheduling (SPS) configuration information.

In an embodiment of the present disclosure, the CFR related configuration information is initial BWP-specific CFR related configuration information.

In an embodiment of the present disclosure, the serving cell common configuration information includes at least information of a frequency domain resource location and a bandwidth of an initial BWP.

In an embodiment of the present disclosure, the sending module 610 is further configured to send the BWP-specific multicast service configuration information to the terminal based on a radio resource control (RRC) signaling.

In an embodiment of the present disclosure, the PDCP configuration information includes at least a PDCP configuration or a PDCP state variable.

In an embodiment of the present disclosure, the PDCP state variable includes at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

In an embodiment of the present disclosure, the RLC configuration information includes at least an RLC configuration or an RLC state variable.

In an embodiment of the present disclosure, the RLC state variable includes at least one of:
an earliest sequence number (SN) to be reassembled;
an SN value after an SN triggering a reassembling timer;
an SN value after a received maximum SN value; or
a reassembling timer.

In an embodiment of the present disclosure, the RLC configuration information includes:
for a split MRB, an RLC including an RLC for a point to multipoint (PTM) transmission.

As shown in FIG. 7, FIG. 7 is a block diagram showing a communication apparatus 700 according to an embodiment of the present disclosure. The communication apparatus 700 may be a network device, a UE, or a chip, a chip system or a processor that supports the network device to realize the above-described methods, or a chip, a chip system or a processor that supports the UE to realize the above-described methods. The apparatus may be configured to realize the methods described in the above method embodiments, and for details, please refer to the descriptions of the above-described method embodiments.

The communication apparatus 700 may include one or more processors 701. The processor 701 may be a general purpose processor or a dedicated processor, such as, a baseband processor or a central processor. The baseband processor is configured to process a communication protocol and communication data. The central processor is configured to control the communication apparatus (e.g., a base station, a baseband chip, a terminal, a terminal chip, a central unit (CU) or a distributed unit (DU)), to executing a computer program, and to process data of the computer program.

Optionally, the communication apparatus 700 may further include one or more memories 702, on which a computer program 704 may be stored. The processor 701 executes the computer program 704 to cause the communication apparatus 700 to perform the methods described in the above method embodiments. Alternatively, data may also be stored in the memory 702. The communication apparatus 700 and the memory 702 may be provided separately or may be integrated together.

Optionally, the communication apparatus 700 may further include a transceiver 705 and an antenna 706. The transceiver 705 may be referred to as a transceiver unit, a transceiver machine, or a transceiver circuit, etc., and may be used to implement a receiving and sending function. The transceiver 705 may include a receiver and a transmitter. The receiver may be referred to as a receiver machine or a receiving circuit, for realizing a receiving function. The transmitter may be referred to as a sender machine or sending circuit, for realizing the sending function.

Optionally, the communication apparatus 700 may further include one or more interface circuits 707. The interface circuit 707 is used to receive code instructions and transmit the code instructions to the processor 701. The processor 701 executes code instructions to cause the communication apparatus 700 to perform the method described in the method embodiments.

In an implementation, the processor 701 may include a transceiver for implementing the receiving function and sending function. For example, the transceiver may be a transceiver circuit, or an interface, or an interface circuit. The transceiver circuit, interface, or interface circuitry for implementing the receiving and sending function may be separated, or may be integrated together. The transceiver circuit, interface, or interface circuit described above may be configured for code/data reading and writing, or may be configured for signal sending or delivery.

In an implementation, the processor 701 may store the computer program 703, and the computer program 703 may run on the processor 701 to cause the communication apparatus 700 to perform the methods described in the above method embodiments. The computer program 703 may be solidified in the processor 701, in which case the processor 701 may be implemented by hardware.

In an implementation, the communication apparatus 700 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus described in the above embodiments may be a network device or a UE, but the scope of the communication apparatus described in the present disclosure is not limited thereto, and the structure of the communication apparatus may not be limited by FIG. 7. The communication apparatus may be a stand-alone device or a part of a larger device. For example, the communication apparatus may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication apparatus may be the chip or the chip system, reference may be made to a block diagram of the chip shown in FIG. 8. The chip shown in FIG. 8 includes a processor 801 and an interface 802. There may be one or more processors 801, and there may be multiple interfaces 802.

Optionally, the chip further includes a memory 803, which is used to store necessary computer program and data.

It is understood by those skilled in the art that various illustrative logical blocks and steps listed in the embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as being beyond the scope of protection of the embodiments of the disclosure.

The present disclosure further provides a readable storage medium for storing instructions. When the instructions are executed by a computer, the function of any of the method embodiments described above is implemented.

The present disclosure further provides a computer program product. When the computer program product is executed by a computer, the function of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In the embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The terms "machine-readable medium" and "computer-readable medium" as used herein refer to any computer program product, device, and/or apparatus that is used to provide machine instructions and/or data to a programmable processor (e.g., a disk, a CD, a memory, a programmable logic device (PLD)), including machine-readable media that receive machine instructions as a machine-readable signals. The term "machine-readable signal" refers to any signal used to provide the machine instructions and/or data to the programmable processor.

The system and technology described here may be implemented in a computing system that include back-end components (e.g., as a data server), or a computing system that includes a middleware component (e.g., an application server), or a computing system that include a front-end component (e.g., a user computer with a graphical user interface or a web browser, through which a user may interact with the implementation of the system and technology described here), or a computing system that includes any combination of such back-end, middleware, or front-end components. The component of the system may be interconnected through any form or medium of digital data communication (e.g., a communication network). An example of the communication network includes local area networks (LAN), wide area network (WAN), and the Internet.

The computer system may include a client and a server. The client and the server are generally far apart from each other and typically interact through a communication network. A client-server relationship is generated by a computer program that runs on a corresponding computer and has a client-server relationship with each other.

It should be understood that the various forms of processes shown above may be used, with steps re-ordered, added, or deleted. For example, the steps described in the present disclosure may be executed in parallel, sequentially, or in a different order, as long as the desired results of the technical solution disclosed herein are achieved, and this text does not limit such execution.

Furthermore, it should be understood that the each embodiment of the present disclosure may be implemented separately or in combination with other embodiments, as permitted by the technical solution.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in hardware or software way depends on the particular application and design constraints of the technical solution. Those skilled in the art may use different ways to implement the described functions for each particular application, but such implementations should not be considered as beyond the scope of the disclosure.

It is clearly understood by those skilled in the field that, for the convenience and brevity of description, detailed work processes of the systems, apparatuses, and units described above may be referred to the corresponding processes in the above method embodiments, which are not be repeated here..

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A configuration method for supporting reception of an inactive-state multicast service, performed by a terminal, comprising:
receiving a multicast service using inactive-state multicast service configuration information.

2. The method according to claim 1, wherein multicast service configuration information comprises at least one of:
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

3. The method according to claim 2, wherein the MRB is an MRB of one or more connected-state multicast services.

4. The method according to claim 2, wherein the multicast service configuration information comprises the MRB, and the method further comprises:
determining, by the terminal, an MRB for receiving the inactive-state multicast service based on a multicast radio bearer identifier (MRB ID), wherein the multicast service configuration information comprises the MRB ID; or
determining, by the terminal, an MRB for receiving the inactive-state multicast service based on network indication information, wherein the multicast service configuration information comprises the network indication information.

5. The method according to claim 4, further comprising:
determining, by the terminal, based on the MRB ID or the network indication information, an MRB of one or more connected-state multicast services as the MRB for receiving the inactive-state multicast service.

6. The method according to claim 2, wherein the MAC configuration information comprises at least one of:
group radio network temporary identifier (g-RNTI) related configuration information; or
group configured scheduling radio network temporary identifier (g-CS-RNTI) related configuration information.

7. The method according to claim 6, wherein the g-RNTI related configuration information or the g-CS-RNTI related configuration information comprises at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

8. The method according to claim 2, wherein the BWP-specific multicast service configuration information comprises at least one of:
common frequency resource (CFR) related configuration information; or
serving cell common configuration information.

9. The method according to claim 8, wherein the CFR related configuration information comprises at least one of:
a frequency domain resource location and a bandwidth;
physical downlink control channel (PDCCH) configuration information;
physical downlink shared channel (PDSCH) configuration information; or
semi-persistent scheduling (SPS) configuration information.

10. The method according to claim 8, wherein the CFR related configuration information is initial BWP-specific CFR related configuration information.

11. The method according to claim 8, wherein the serving cell common configuration information comprises at least information of a frequency domain resource location and a bandwidth of an initial BWP.

12. The method according to claim 8, further comprising:
saving the serving cell common configuration information, wherein the serving cell common configuration information comprises at least information of a frequency domain resource location and a bandwidth of an initial BWP.

13. The method according to claim 8, further comprising:
receiving the BWP-specific multicast service configuration information sent by a network side through a radio resource control (RRC) signaling, and receiving, by the terminal, based on the BWP-specific multicast service configuration information, the inactive-state multicast service.

14. The method according to claim 8, further comprising:
receiving, by the terminal, the inactive-state multicast service based on BWP-specific multicast service configuration information of a connected-state multicast service.

15. The method according to claim 8, further comprising:
in a case that a network side does not configure the BWP-specific multicast service configuration information, receiving, by the terminal, the inactive-state multicast service based on BWP-specific multicast service configuration information of a connected-state multicast service.

16. The method according to claim 2, wherein the PDCP configuration information comprises at least a PDCP configuration or a PDCP state variable.

17. The method according to claim 16, wherein the PDCP state variable comprises at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

18. The method according to claim 2, wherein the RLC configuration information comprises at least an RLC configuration or an RLC state variable.

19. The method according to claim 18, wherein the RLC state variable comprises at least one of:
an earliest sequence number (SN) to be reassembled;
an SN value after an SN triggering a reassembling timer;
an SN value after a received maximum SN value; or
a reassembling timer.

20. The method according to claim 2, wherein the RLC configuration information comprises:
for a split MRB, an RLC comprising an RLC for a point to multipoint (PTM) transmission.

21. The method according to any one of claims 1-20, further comprising:
receiving a radio resource control release (RRCRelease) message containing a suspend configuration sent by a network side, wherein the RRCRelease message comprises the multicast service configuration information.

22. The method according to claim 1, further comprising:
storing, by the terminal, the multicast service configuration information.

23. A configuration method for supporting reception of an inactive-state multicast service, performed by a network side, comprising:
sending an inactive-state multicast service to a terminal, wherein the inactive-state multicast service is received by the terminal using inactive-state multicast service configuration information.

24. The method according to claim 23, further comprising:
sending a radio resource control release (RRCRelease) message containing a suspend configuration to the terminal, wherein the RRCRelease message comprises multicast service configuration information.

25. The method according to claim 23, wherein the multicast service configuration information comprises at least one of:
a multicast radio bearer (MRB);
medium access control (MAC) configuration information related to the multicast service;
bandwidth part (BWP)-specific multicast service configuration information;
packet data convergence protocol (PDCP) configuration information related to the multicast service;
radio link control (RLC) configuration information related to the multicast service; or
service data adaptation protocol (SDAP) configuration information related to the multicast service.

26. The method according to claim 25, wherein the MRB is an MRB of one or more connected-state multicast services.

27. The method according to claim 25, wherein the multicast service configuration information comprises the MRB, and the method further comprises:
wherein the multicast service configuration information comprises a multicast radio bearer identifier (MRB ID) to cause the terminal to determine an MRB for receiving the inactive-state multicast service based on the MRB ID; or
wherein the multicast service configuration information comprises network indication information to cause the terminal to determine the MRB for receiving the inactive-state multicast service based on the network indication information.

28. The method according to claim 25, wherein the MAC configuration information comprises at least one of:
group radio network temporary identifier (g-RNTI) related configuration information; or
group configured scheduling radio network temporary identifier (g-CS-RNTI) related configuration information.

29. The method according to claim 28, wherein the g-RNTI related configuration information or the g-CS-RNTI related configuration information comprises at least one of:
a radio network temporary identifier (RNTI)-specific configuration ID;
a g-RNTI;
a g-CS-RNTI;
discontinuous reception (DRX) configuration information;
hybrid automatic repeat request (HARQ) feedback configuration information; or
a number of repetitions of dynamic scheduling of multicast service data.

30. The method according to claim 25, wherein the BWP-specific multicast service configuration information comprises at least one of:
common frequency resource (CFR) related configuration information; or
serving cell common configuration information.

31. The method according to claim 30, wherein the CFR related configuration information comprises at least one of:
a frequency domain resource location and a bandwidth;
physical downlink control channel (PDCCH) configuration information;
physical downlink shared channel (PDSCH) configuration information; or
semi-persistent scheduling (SPS) configuration information.

32. The method according to claim 30, wherein the CFR related configuration information is initial BWP-specific CFR related configuration information.

33. The method according to claim 30, wherein the serving cell common configuration information comprises at least information of a frequency domain resource location and a bandwidth of an initial BWP.

34. The method according to claim 30, further comprising:
sending the BWP-specific multicast service configuration information to the terminal based on a radio resource control (RRC) signaling.

35. The method according to claim 25, wherein the PDCP configuration information comprises at least a PDCP configuration or a PDCP state variable.

36. The method according to claim 35, wherein the PDCP state variable comprises at least one of:
a count value of a next packet data convergence protocol service data unit (PDCP SDU) to be transmitted;
a count value of a next PDCP SDU to be received;
a count value of a first PDCP SDU to be delivered to an upper layer;
a count value after a count value of a PDCP PDU triggering a reordering timer; or
a reordering timer.

37. The method according to claim 25, wherein the RLC configuration information comprises at least an RLC configuration or an RLC state variable.

38. The method according to claim 37, wherein the RLC state variable comprises at least one of:
an earliest sequence number (SN) to be reassembled;
an SN value after an SN triggering a reassembling timer;
an SN value after a received maximum SN value; or
a reassembling timer.

39. The method according to claim 25, wherein the RLC configuration information comprises:
for a split MRB, an RLC comprising an RLC for a point to multipoint (PTM) transmission.

40. A configuration apparatus for supporting reception of an inactive-state multicast service, applied to a terminal in inactive state, and the apparatus comprises:
a receiving module, configured to receive a multicast service using inactive-state multicast service configuration information.

41. A configuration apparatus for supporting reception of an inactive-state multicast service, applied to a network side, and the apparatus comprises:
a sending module, configured to send the inactive-state multicast service to a terminal, wherein the inactive-state multicast service is received by the terminal using inactive-state multicast service configuration information.

42. A communication device, comprising:
a transceiver;
a memory;
a processor connected with the transceiver and the memory respectively, wherein the processor is configured to control the transceiver to receive and send radio signals by performing computer executable instructions on the memory and is capable of implementing the method according to any of claims 1-22 or the method according to any of claims 23-39.

43. A computer storage medium, wherein the computer storage medium stores computer executable instructions, and when the computer executable instructions are executed by a processor, the method according to any of claims 1-22 or the method according to any of claims 23-39 is implemented.
